# EUROPEAN PATENT SPECIFICATION

(11) **EP 0 378 876 B1**
(45) Date of publication and mention of the grant of the patent: **24.02.1993**
(21) Application number: 89203191.5
(22) Date of filing: 14.12.1989
(51) Int. Cl.: A23G 3/00, A23G 1/00, A23D 9/00

(54) **Low - calorie confectionery products**
Kalorienarme Konditorwaren
Produit de confiserie à faible teneur en calorie

(30) Priority: 21.12.1988 GB 8829831; 03.02.1989 EP 89200237
(43) Date of publication of application: 25.07.1990
(73) Proprietor: UNILEVER N.V., 3013 AL Rotterdam (NL); UNILEVER PLC, London EC4P 4BQ (GB)
(72) Inventor: Clarke, Thomas Cyril, Biddenham, Bedford MK40 4AF (GB)
(74) Representative: Mulder, Cornelis Willem Reinier, Dr.

(56) References cited:
- GB-A- 1 444 820
- US-A- 3 093 481
- US-A- 3 600 186
- US-A- 4 127 679

## Description

The present invention relates to low-calorie confectionery products, and in particular to such products wherein a substantial proportion of the fat material consists of indigestible polyol fatty acid polyesters.

In confectionery products, such as in particular chocolate products the characteristics of the fat material is particularly important. This fat material consists of so-called hard fats, which have the special property that at room temperature they are hard but melt quickly at body temperature, in particular at mouth temperature. The most important example of such a hard fat is cocoa-butter.

High raw material prices and the corresponding desire in industry to be less dependent on cocoa-butter as an almost sole source of hard fat suitable for the confectionery industry, have led to the development of alternative vegetable fats which can act as partial or full substitutes of cocoa-butter.

A well-known and widely used group of cocoa-butter substitutes are the so-called lauric cocoa-butter replacers, which are fully refined fats predominantly produced from palmkernel and/or coconut oil by means of fractionation, hydrogenation and/or interesterification. Although the physical properties of the lauric cocoa-butter replacers such as hardness, melting profile and flavour release, almost equal those of cocoa-butter, their physical properties are completely altered in blends with other fats, including cocoa-butter. Due to this characteristic the lauric cocoa-butter replacers are normally only used as full hard-fat substitutes, and are not blended with e.g. cocoa-butter in amounts of more than 5 to 10 %, calculated as a percentage of the fat phase. When blended in higher ratios, the resulting products become softer, less heat-resistant, waxy and have a greatly increased risk of fat-bloom, which is the formation of a grey/white surface layer on confectionery upon storage.

Two further less widely used groups of cocoa-butter substitutes can be distinguished: the non-lauric cocoa-butter replacers and the cocoa-butter equivalents. Although both groups suffer less from the drawback of poor compatibility with cocoa-butter, they are derived from selected, less available raw materials and their manufacture requires more careful and elaborate processing adversely influencing availability and price.

Particularly, in the western world there is an increased interest in food products having a reduced caloric content. In the area of confectionery products up to now the focus has been on the reduction of carbohydrates, in particular the sugar component, by using artificial or reduced-calorie sweeteners.

In the general area of low-calorie food products it has been suggested to reduce the caloric content of food products, in particular of the traditionally high-fat food products such as salad dressings, margarines, shortenings, and the like, by replacement of the triglyceride fats by non-adsorbable, non-digestible polyol fatty acid polyesters. Low-calorie food products comprising polyol fatty acid polyesters are disclosed in US 3,600,186.

In JP 62/205738 minor amounts of sucrose palmitate (0.5-3 % by weight of the fat phase) are suggested as crystal growth inhibitors in shortenings and chocolate compositions.

In US 3,093,481 polyol fatty acid polyesters such as sucrose octastearate and octapalmitate are suggested for inclusion into shortenings in amounts of upto 0.5 %. They are stated to have beneficial effects upon stability and consistency of the shortenings.

In US 2,886,438 chocolate mixes and shortenings comprising upto 5 % by weight of the fat of a fatty acid ester of an unsubstituted mono-alkyl-glucoside, such as ethylglucoside stearate are disclosed. The glucoside esters are stated to have beneficial effects upon consistency and appearance.

In EP 0 236 288 the suitability in food products of polyol fatty acid polyesters having a specific viscosity and stability profile, is described. Among the many types of food applications also chocolates and chocolate confections are mentioned.

In EP 0 271 951 there are disclosed cocoa-butter substitutes comprising sucrose fatty acid polyesters the fatty acid ester group composition of which is a combination of lauric and palmitic fatty acids, or, in the alternative, a combination of capric and stearic fatty acids.

In EP 0 285 187 there are disclosed reduced calorie chocolate confections comprising relatively steep-melting non-digestible fatty acid polyesters having a clear melting point of 30-36°C in combination with an artificial sweetener.

It has now been found that polyol fatty acid polyesters comprising a substantial proportion of trans-unsaturated fatty acid ester groups, in particular trans-oleate groups, in combination with saturated fatty acid ester groups provide good hard-fat replacers suitable for use in confectionery products in amounts sufficient to provide significant calorie reduction. Inclusion of a substantial proportion of trans-unsaturated fatty acid ester groups allows greater compositional flexibility in terms of the saturated fatty acid ester groups without adverse effects upon melting profile and corresponding suitability as hard-fat substitutes in confectionery products. Confectionery products based upon such hard-fat substitutes can be better fine-tuned to speciality applications without giving rise to blooming and textural problems, and without the need of elaborate tempering.

Accordingly, it is an object of the present invention to provide confectionery products having reduced caloric contents.

It is a further object of the invention to provide confectionery products which do not suffer from fat blooming upon storage.

It is still a further object of the invention to provide confectionery products which allow increased production flexibility with respect to tempering.

Accordingly, the present invention provides low-calorie confectionery products, wherein a substantial proportion of the fat material consists of indigestible polyol fatty acid polyesters, at least 30 % by weight of the polyester fatty acid composition being unsaturated fatty acids trans-hardened to a level of over 30 %.

In this specification the term 'confectionery product' is intended to include all solid, edible fatty products conventionally comprising cocoa-butter or substitutes and/or replacers thereof, and in particular, chocolate products comprising cocoa material, which may be introduced in the form of any, optionally skimmed, cocoa powder, cocoa mass or chocolate liquor such as conventionally are used in chocolate manufacture.

The indigestible polyol fatty acid polyesters employed in the present invention are fatty acid polyesters derived from any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of the preferred sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and α-methylglucoside. The sucrose polyol is preferred most.

The degree of conversion to polyester, which is defined as the percentage of polyol hydroxyl groups that, on an average, have been esterified with fatty acids, should be over 70 %, and preferably is over 85 or even 95 %.

For the purposes of the present invention by indigestibility is meant that at least about 70 % by weight of the material concerned is not digested by the human body.

A substantial proportion of the fatty acid ester group composition of the polyesters in the confectionery products of the invention should be trans-hardened unsaturated fatty acids. Suitable levels of such, in particular mono-unsaturated fatty acids lie in the range of from 30 to 80 % of the overall polyester fatty acid composition. At least about 30 % thereof, and in particular 30 to 80 % thereof, should contain double bonds in the trans form, trans levels of 50 to 70 % being preferred. The preferred type of trans fatty acid is trans-oleic acid (elaidic acid).

Trans-unsaturated fatty acid ester groups, and in particular elaidic acid ester groups are suitably derived from unsaturated fatty acid sources containing substantial amounts of unsaturated C₁₈-fatty acid chains, which may be fatty acids per se, lower alkyl esters thereof, fats and oils or polyol polyesters derived therefrom, which have been hydrogenated under conditions of isomerization, i.e. hydrogenation conditions promoting the establishment of the cis-trans double-bond equilibrium. Suitable such sources are trans-hardened oils such as palm oil, soybean oil and rapeseed oil hardened to melting points within the range of 30 to 45°C. If necessary, sources of trans-unsaturated fatty acid ester groups should be fractionated to yield above cis-trans equilibrium levels.

The remaining part of the polyester fatty acid ester group composition is derived from saturated fatty acids, or sources thereof. In particular, fatty acids having alkyl chain lengths of from 12 to 18 carbon atoms are suitable. In general the polyester saturated fatty acid composition comprises up to about 60 % of lauric and/or myristic acids and from about 10 to 100 % of palmitic and/or stearic acids, percentages being by weight of the saturated fatty acid ester composition. Preferably a major part of the polyester saturated fatty acid composition consists of a combination of lauric and palmitic acids, a saturated fatty acid composition comprising up to 30 % of lauric acid and from 50 to 90 % of palmitic acid being preferred most.

In order to optimise the low-calorie confectionery products to specific applications, the weight ratio of unsaturated to saturated fatty acids in the polyester fatty acid composition may be varied, but should lie within the ranges indicated hereinbefore.

For chocolate bar and coating applications the weight ratio of polyester unsaturated to saturated fatty acids preferably lies within the range of from 30:70 to 50:50, and more preferably is about 40:60.

For confectionery filling applications the weight ratio preferably lies within the range of from 40:60 to 70:30, in particular, 50:50 to 60:40.

In general fatty acids per se, lower alkylesters thereof or naturally occurring fats and oils may be used as source for the polyester fatty acids. Conventional techniques may be used to introduce the required fatty acid composition and degree of trans-unsaturation. Suitable such techniques include full or partial hydrogenation, interesterification and fractionation, and may be used before or after conversion of the polyols to the corresponding polyol fatty acid polyesters.

The selection of the appropriate blend of polyester unsaturated and saturated fatty acids is in particular determined by the required melting characteristics of the resulting polyol fatty acid polyester containing fat-blend. A convenient way to define the melting characteristics of a fat or a fat-like substance is by its N-line. The N-line is the graph of Nₜ-values versus the temperature t. The Nₜ-value is conveniently measured by the nuclear magnetic relaxation technique and is a direct measure of the level of solid fat content at temperature t. This method is suitably described in Fette, Seifen, Anstrichmittel 80(5), 180-186 (1978). To some extent the measurement of Nₜ-values is dependent on the temperature profile used to prepare the samples for the NMR-measurement. For the purposes of the present invention the following preparatory temperature profile is adopted: 30 minutes at 60°C, 90 minutes at 0°C, 4 hours at 26°C, again 90 minutes at 0°C and finally 60 minutes at the temperature of the measurement, after which the NMR measurement is carried out.

Suitable polyol fatty acid polyesters containing fat-blends for use in the low-calorie confectionery products in accordance with the invention have a N-line characterised by a N₂₀ of at least 30, particularly of at least 50, and a N₃₇ of below 10. Preferred chocolate-bar and -coating fat-blends have a N-line characterised by a N₂₀ of at least 70, and a N₃₇ of less than 5.

Instead of a 'single' polyol fatty acid polyester, i.e. a polyester which is synthesized from a polyol and a source for the fatty acid residues in a single reaction, also a mixture or blend of polyol fatty acid polyesters, i.e. a blend of 'single' polyol fatty acid polyesters, may be used provided the overall fatty acid residues composition of the final blend is in accordance with the present invention.

The fat material of the low-calorie confectionery product in accordance with the present invention may consist solely of the polyol fatty acid polyester, or may be a mixture of the polyester and natural cocoa-butter or conventional cocoa-butter substitutes, provided such mixing does not result in a solids versus temperature profile substantially different from that indicated hereinbefore. If a mixture is considered desirable, the amount of polyester should be at least 50 % by weight of the fat material in the confectionery product. To take full advantage of the low-calorie aspect the fat material preferably consists of at least 75 % and most preferably substantially completely consists of the polyol fatty acid polyester.

Low-calorie confectionery products in accordance with the present invention comprise in addition to the fat material conventional ingredients such as suitable flavouring, in particular introduced in the form of cocoa powder, chocolate liquor or cocoa mass, sugar, milk solids and emulsifier, such as in particular lecithin.

Suitable sugars include the common sugars, such as sucrose and raffinose. These conventional sugars may also be replaced by dietetic sweeteners such as sorbitol, fructose, xylitol and lactitol which provide confectionery products particularly suitable to avoid tooth decay or in diabetic diets. Such dietetic sweeteners are included in similar amounts as conventional sugars, i.e in amounts of 30 to 55 % by weight of the final confectionery product. Inclusion of sorbitol and xylitol have the further advantage to increase the cool-melting sensation of the confectionery products.

It may be of particular advantage to use a low-calorie high-intensity sweetener in combination with the indigestible hard-fat substitute of the invention to provide confectionery products having an even further reduced caloric content. Suitable such high- intensity sweeteners include aspartame (phenylalanin), saccharin, cyclamate, sucralose, acesulfame-K, thaumatin and mixtures thereof. They are normally included in amounts of from 0.1 to 5 % by weight of the product. If so desired, the high-intensity sweeteners may also be used to top up reduced amounts of the common sugars or dietetic sweeteners. High-intensity sweeteners are generally supplemented to the amount of sweeteners they replace, by suitable low-calorie bulking agents, such as polydextrose.

For the purpose of increased cool-melting sensation also effective amounts of in particular dextrose can and preferably are included. Suitable amounts range from 5 to 30 % by weight of the final product.

Manufacture of the confectionery products in accordance with the present invention follows the conventional processing techniques in confectionery manufacture including mixing, milling, conching, and moulding. The improved crystallisation characteristics render strict control of tempering conditions superfluous.

### Example 1

A chocolate filling composition consists of
- sucrose fatty acid polyester: 40 % by weight,
- sucrose: 40 % by weight,
- skim milk powder: 15 % by weight, and
- de-fatted cocoa-powder: 5 % by weight.

The fatty acids of the sucrose polyester are derived from palm oil triglyceride material hardened to a melting point of 43°C, the fatty acid composition being:
- unsaturated fatty acids: 47 % by weight, of which
- elaic acid: 39 % by weight,
- oleic acid: 56 % by weight,
- others: 5 % by weight, and
- saturated fatty acids: 53 % by weight, of which
- palmitic acid: 75 % by weight,
- stearic acid: 17 % by weight,
- others: 8 % by weight.

## Claims

1. Low-calorie confectionery products, wherein a substantial proportion of the fat material consists of indigestible polyol fatty acid polyesters, at least 30 % by weight of the polyester fatty acid composition being unsaturated fatty acids trans-hardened to a level of over 30 %.

## Patentansprüche

1. Kalorienarme Konditor- bzw. Süßwaren, in welchen ein wesentlicher Anteil des Fettmaterials aus unverdaulichen Polyolfettsäurepolyestern besteht, wobei mindestens 30 Gew.-% der Polyesterfettsäurezusammensetzung ungesättigte Fettsäuren sind, die auf einen Grad von mehr als 30 % trans-gehärtet sind.

## Revendications

1. Produits de confiserie à faible teneur en calories, dans lesquels une proportion substantielle de la matière grasse est constituée de polyesters d'acide gras et de polyol ne pouvant être digérés, au moins 30% en masse de la composition d'acide gras de polyester étant des acides gras insaturés trans-durcis à un niveau supérieur à 30%.
